# FASCICULE DE BREVET EUROPEEN

(11) **EP 4 163 179 B1**
(45) Date de publication et mention de la délivrance du brevet: **27.12.2023**
(21) Numéro de dépôt: 22199575.6
(22) Date de dépôt: 04.10.2022
(51) Int. Cl.: B61D 17/08, B62D 21/17, B62D 25/02, F16L 23/14, F16L 25/00, B61D 17/00, B61G 5/08

(54) **STRUCTURE DE CARROSSERIE POUR CAISSE POUR VÉHICULE DE TRANSPORT PUBLIC COMPRENANT AU MOINS DEUX VOITURES**
KAROSSERIESTRUKTUR FÜR EINEN WAGENKASTEN EINES ÖFFENTLICHEN VERKEHRSMITTELS, DER MINDESTENS ZWEI WAGEN UMFASST
BODY STRUCTURE FOR A BODY OF A PUBLIC TRANSPORT VEHICLE COMPRISING AT LEAST TWO CARS

(30) Priorité: 05.10.2021 FR 2110525
(43) Date de publication de la demande: 12.04.2023
(73) Titulaire: SpeedInnov, 75008 Paris (FR)
(72) Inventeur: PERIN, Daniel, 17220 Saint-Rogatien (FR); MONTIGAUD, Philippe, 17000 La Rochelle (FR); CAGNOUX, Yves, 17000 La Rochelle (FR); GUIGNER, Carl, 17170 Ferrières d'Aunis (FR); CHOPIN, Nicolas, 17180 Périgny (FR)
(74) Mandataire: Lavoix

(56) Documents cités:
- EP-A1- 2 873 580
- EP-A1- 3 650 319
- US-B2- 9 829 130

## Description

La présente invention concerne une structure de carrosserie pour caisse pour véhicule de transport public.

On connaît de EP 3650319 une structure de carrosserie pour caisse pour véhicule de transport public, notamment véhicule ferroviaire ou véhicule de transport routier, par exemple de transport routier guidé, comprenant une paroi s'étendant selon une direction longitudinale, la paroi délimitant au moins une cavité s'étendant selon la direction longitudinale.

La cavité délimite un passage pour un fluide sous pression, par exemple un gaz sous pression, la paroi étant formée d'une seule pièce, la paroi comprenant une face interne, une face externe et des nervures reliant la face interne et la face externe, chaque cavité étant définie entre la face interne, la face externe et deux nervures adjacentes.

L'intégration du passage du fluide ou du gaz comprimé dans la paroi permet de réduire fortement l'encombrement, cela permettant une intégration plus facile d'éléments additionnels tels que des porte-bagages dans l'habitacle et autres équipements d'aménagement intérieurs.

Cependant, dans ce type de structure, il existe un besoin pour raccorder deux caisses successives d'un point de vue pneumatique ou hydraulique.

A cet effet, l'invention a pour objet une structure de carrosserie pour caisse pour véhicule de transport public comprenant au moins deux voitures, notamment véhicule ferroviaire ou véhicule de transport routier, par exemple de transport routier guidé, comprenant une paroi s'étendant selon une direction longitudinale, la paroi délimitant au moins une cavité s'étendant selon la direction longitudinale, la cavité délimitant un passage pour un fluide sous pression, par exemple un gaz sous pression, la paroi étant formée d'une seule pièce, la paroi comprenant une face interne, une face externe et des nervures reliant la face interne et la face externe, chaque cavité étant définie entre la face interne, la face externe et deux nervures adjacentes, chaque cavité présentant une extrémité ouverte, caractérisée en ce que la structure de carrosserie comprend un dispositif de jonction pneumatique ou hydraulique propre à mettre en communication fluidique et de façon étanche deux cavités de deux voitures adjacentes, le dispositif de jonction pneumatique ou hydraulique étant formé par l'extrémité ouverte de chacune des deux cavités présentant une forme adaptée pour recevoir une pièce de raccordement pneumatique ou hydraulique, et par ladite pièce de raccordement pneumatique ou hydraulique, la pièce de raccordement pneumatique ou hydraulique comprenant un tube creux s'étendant entre une première extrémité adaptée pour être raccordée à l'extrémité ouverte de l'une des cavités et une deuxième extrémité adaptée pour être raccordée à un tube de raccordement.

La structure de carrosserie selon l'invention peut comprendre l'une ou plusieurs des caractéristiques suivantes, prises seules ou selon toutes combinaisons techniquement envisageables :
- le tube creux est coudé ;
- la pièce de raccordement pneumatique ou hydraulique comporte une première section de fixation à la caisse de la voiture respective disposée au voisinage de la première extrémité de la pièce de raccordement pneumatique ou hydraulique ;
- la première section de fixation se présente sous la forme d'une pièce rectangulaire s'étendant transversalement au tube creux, et comprend au moins un premier orifice de réception de moyens de fixation afin de fixer la pièce de raccordement pneumatique ou hydraulique à la caisse de la voiture respective ;
- la pièce de raccordement pneumatique ou hydraulique comporte une deuxième section de fixation à la caisse de la voiture respective s'étendant en saillie depuis le tube creux, et disposée au voisinage de la deuxième extrémité de la pièce de raccordement pneumatique ou hydraulique, la deuxième section de fixation comprenant au moins un deuxième orifice de réception de moyens de fixation afin de fixer la pièce de raccordement pneumatique ou hydraulique à la caisse respective ;
- la deuxième section de fixation comprend un unique deuxième orifice de réception, le deuxième orifice étant de préférence de forme oblongue allongée ;
- la structure de carrosserie comprend à l'extrémité ouverte de la cavité un manchon creux complémentaire de la première extrémité, le manchon comprenant une extrémité de fixation destinée à être fixée à la pièce de raccordement pneumatique ou hydraulique, le manchon présentant un lamage à son extrémité de fixation afin de raccorder de façon étanche la pièce de raccordement pneumatique ou hydraulique au manchon ;
- la première extrémité est filetée, ou présente des aspérités complémentaires de renfoncements formés dans le manchon ;
- la pièce de raccordement pneumatique ou hydraulique comprend en outre un second tube creux en communication fluidique avec le tube creux disposé à proximité de la deuxième extrémité et transversalement au tube creux.

L'invention concerne également un véhicule comprenant au moins deux voitures, au moins deux voitures adjacentes comprenant une structure de carrosserie selon l'une quelconque des revendications précédentes.

L'invention sera mieux comprise à la lecture de la description qui va suivre, donnée uniquement à titre d'exemple et faite en se référant aux figures annexées, parmi lesquelles :
- La Figure 1 est une vue schématique d'une structure de carrosserie comprenant un dispositif de jonction pneumatique ou hydraulique selon un exemple de mode de réalisation de l'invention ;
- La Figure 2 est une vue schématique en perspective d'une pièce de raccordement pneumatique ou hydraulique du dispositif de jonction pneumatique ou hydraulique ; et
- La Figure 3 est une vue schématique en perspective de l'extrémité ouverte d'une cavité présentant une forme adaptée pour recevoir la pièce de raccordement pneumatique ou hydraulique de la Figure 2.

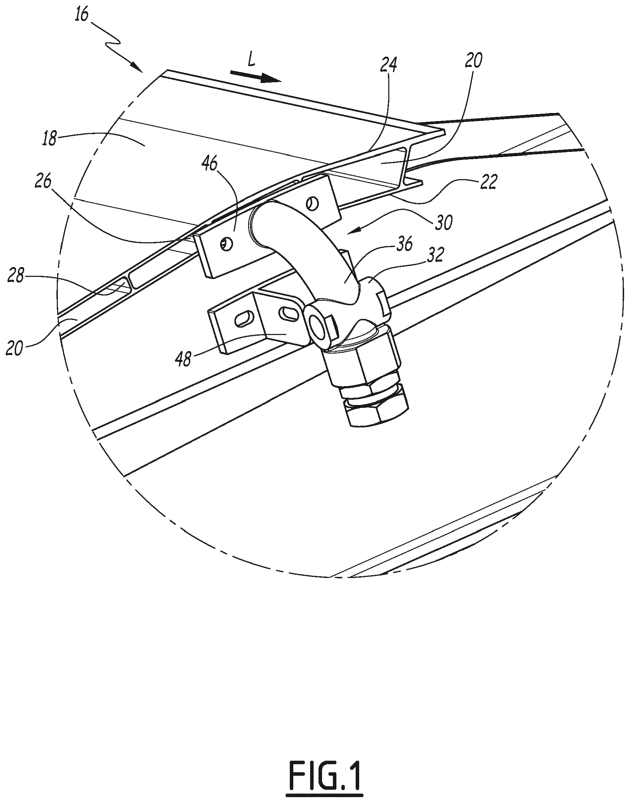

On a représenté, sur la Figure 1, une partie d'une structure de carrosserie 16 pour caisse pour véhicule ferroviaire ou véhicule de transport routier, par exemple guidé, selon un premier mode de réalisation de l'invention.

Dans le cas décrit ici, le véhicule de transport public comprend au moins deux voitures comportant chacune une caisse 14.

La structure de carrosserie 16 comprend une paroi 18 s'étendant selon une direction longitudinale L, la paroi 18 délimitant au moins une cavité 20 s'étendant selon la direction longitudinale L.

La cavité 20 délimite un passage pour un fluide sous pression, par exemple un gaz sous pression.

Le fluide ou gaz sous pression a une pression supérieure à 2 × 10⁵ Pa (Pascal) et de préférence comprise entre 5 × 10⁵ Pa et 10 × 10⁵ Pa.

De telles valeurs permettent notamment le service et le fonctionnement optimaux des équipements à alimenter.

La paroi 18 est formée d'une seule pièce.

La paroi 18 comprend une face interne 22, une face externe 24 et des nervures 26 reliant la face interne 22 et la face externe 24.

Chaque cavité 20 est définie entre la face interne 22, la face externe 24 et deux nervures 26 adjacentes.

Chaque cavité 20 présente une extrémité ouverte 28.

La structure de carrosserie 16 comprend un dispositif de jonction pneumatique ou hydraulique 30 propre à mettre en communication fluidique et de façon étanche deux cavités 20 de deux voitures adjacentes.

Le dispositif de jonction pneumatique ou hydraulique 30 est formé par l'extrémité ouverte 28 de chacune des deux cavités 20 présentant une forme adaptée pour recevoir une pièce de raccordement pneumatique ou hydraulique 32.

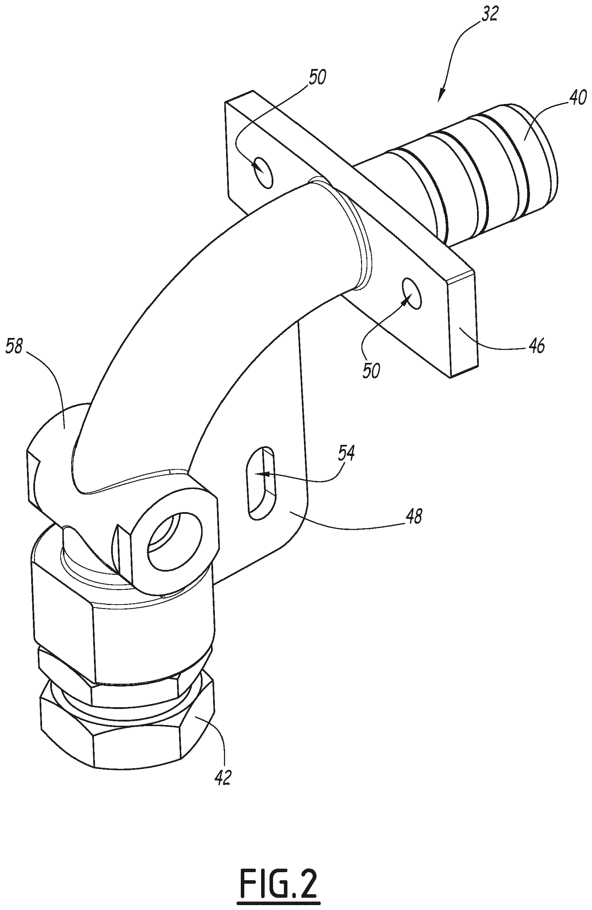

Comme représenté sur la Figure 2, chaque pièce de raccordement pneumatique ou hydraulique 32 comprend un tube creux 36 s'étendant entre une première extrémité 40 adaptée pour être raccordée à l'extrémité ouverte 28 de l'une des cavités 20 et une deuxième extrémité 42 adaptée pour être raccordée à un tube de raccordement, notamment à un flexible de raccordement.

Le tube creux 36 présente une forme coudée.

La première extrémité 40 présente une forme complémentaire d'un manchon 44 creux logé dans la cavité 20 où elle est reçue.

La première extrémité 40 présente une section transversale cylindrique.

Par exemple, la première extrémité 40 est filetée, ou présente des aspérités complémentaires de renfoncements formés dans le manchon 44.

Ainsi, la première extrémité 40 s'emboîte fermement et de façon étanche dans l'extrémité ouverte 28 de la cavité 20.

La deuxième extrémité 42 est adaptée pour recevoir un flexible et le fixer de façon étanche. Avantageusement, la deuxième extrémité 42 comprend un joint torique (non représenté) afin d'assurer l'étanchéité de la fixation.

La deuxième extrémité 42 présente par exemple une section de forme carrée ou hexagonale.

La pièce de raccordement pneumatique ou hydraulique 32 comporte au moins une section de fixation 46, et/ou 48 à la caisse 14 respective.

Par exemple, une première section de fixation 46 se présente sous la forme d'une pièce rectangulaire s'étendant transversalement au tube 36.

La première section de fixation 46 est disposée au voisinage de la première extrémité 40.

La première section de fixation 46 comprend avantageusement au moins un premier orifice 50 de réception de moyens de fixation afin de fixer la pièce de raccordement pneumatique ou hydraulique 32 à la caisse 14 respective.

Par exemple, la première section de fixation 46 comprend deux premiers orifices 50 de réception de moyens de fixation répartis de part et d'autre du tube creux 36.

Les moyens de fixation sont par exemple de la visserie.

Avantageusement, une deuxième section de fixation 48 s'étend en saillie depuis le tube creux 36.

La deuxième section de fixation 48 est disposée au voisinage de la deuxième extrémité 42.

La deuxième section de fixation 48 s'étend sensiblement parallèlement à la première extrémité 40 de la pièce de raccordement pneumatique ou hydraulique 32.

La deuxième section de fixation 48 comprend avantageusement au moins un deuxième orifice 54 de réception de moyens de fixation afin de fixer la pièce de raccordement pneumatique ou hydraulique 32 à la caisse 14 respective.

En particulier, la deuxième section de fixation 48 comprend un unique deuxième orifice 54 de réception. Le deuxième orifice 54 est de préférence de forme oblongue allongée. Cela permet d'assurer une tolérance de fixation lorsque la pièce de raccordement pneumatique ou hydraulique 32 est fixée à la caisse 14 respective.

Les moyens de fixation sont par exemple de la visserie.

La pièce de raccordement pneumatique ou hydraulique 32 comprend avantageusement en outre un second tube creux 58 en communication fluidique avec le tube creux 36 disposé à proximité de la deuxième extrémité 42 et transversalement au tube creux 36.

Le second tube creux 58 permet le raccordement de la cavité 20 respective à des canalisations supplémentaires, afin de distribuer le fluide par exemple vers un système de suspension, et/ou vers un système de freinage.

Le fluide s'écoulant dans le tube creux 36 est ainsi également distribué via le second tube creux 58.

Chaque pièce de raccordement pneumatique ou hydraulique 32 est avantageusement réalisée en métal.

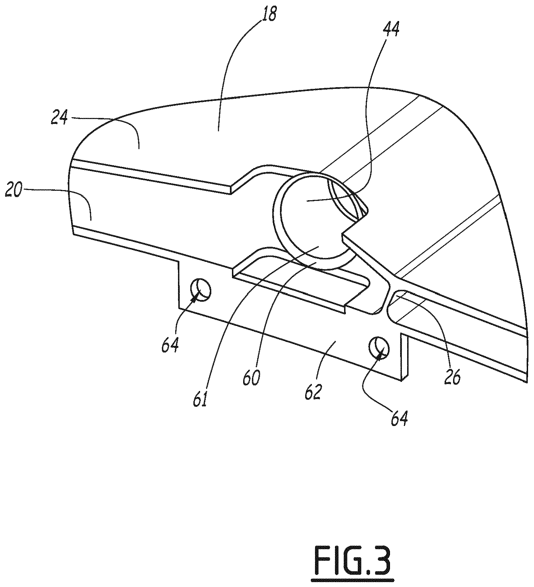

On a représenté sur la Figure 3 l'extrémité ouverte 28 d'une cavité 20 présentant une forme adaptée pour recevoir la pièce de raccordement pneumatique ou hydraulique 32.

La structure de carrosserie 16 comprend à l'extrémité ouverte 28 de la cavité 20 un manchon 44 creux complémentaire de la première extrémité 40 tel qu'évoqué ci-dessus. Le manchon 44 comprend une extrémité de fixation 60 destinée à être fixée à la pièce de raccordement pneumatique ou hydraulique 32.

Le manchon 44 présente avantageusement un lamage à son extrémité de fixation 60 afin de raccorder de façon étanche la pièce de raccordement pneumatique ou hydraulique 32 au manchon 44.

La face externe 24 de la paroi 18 est modifiée pour permettre le positionnement du manchon 44 dans la cavité 20.

Notamment, elle est plus large au contact du manchon 44. En outre, la face externe 24 présente une portion usinée 61 au voisinage de l'extrémité de fixation 60 du manchon 44.

La portion usinée 61 est en retrait par rapport au reste de la face externe 24 de la paroi 18. Grâce à cette portion usinée, la première extrémité 40 de la pièce de raccordement pneumatique ou hydraulique 32 peut être connectée plus facilement au manchon 44.

L'extrémité ouverte 28 comprend en outre un élément 62, par exemple rapporté soudé, s'étendant transversalement à la direction longitudinale et s'étendant depuis la face interne 22 de la paroi 18 à l'extérieur de la cavité 20.

L'élément 62 présente par exemple une forme sensiblement rectangulaire.

L'élément 62 présente au moins un orifice 64 de réception de moyens de fixation, en particulier deux orifices 64.

L'élément 62 est par exemple soudé à la deuxième section de fixation 48 de la pièce de raccordement pneumatique ou hydraulique 32.

Pour connecter la pièce de raccordement pneumatique ou hydraulique 32, la première extrémité 40 de la pièce de raccordement pneumatique ou hydraulique 32 est insérée dans le manchon 44 creux complémentaire de l'extrémité ouverte 28 de la cavité 20.

La première extrémité 40 est ainsi emboîtée fermement et de façon étanche dans le manchon 44.

La première section de fixation 46 la pièce de raccordement pneumatique ou hydraulique 32 est fixée à la caisse 14 par des moyens de fixation placés dans le ou chaque premier orifice 50 de réception.

La deuxième section de fixation 48 de la pièce de raccordement pneumatique ou hydraulique 32 est assemblée à l'élément 62.

Lorsque deux voitures adjacentes comprennent chacune une pièce de raccordement pneumatique ou hydraulique 32 connectée à l'extrémité ouverte 28 de la cavité 20 en regard l'une de l'autre, un flexible peut être connecté à chacune des deuxièmes extrémités 42 des deux pièces de raccordement pneumatique ou hydraulique 32 afin d'assurer la continuité du circuit de fluide sous pression entre les deux voitures, et ce de façon étanche.

Le second tube creux 58 de la pièce de raccordement pneumatique ou hydraulique 32 est optionnellement raccordé à des canalisations supplémentaires, afin de distribuer le fluide par exemple vers un système de suspension, et/ou vers un système de freinage.

Le dispositif de jonction pneumatique ou hydraulique 30 formé par la pièce de raccordement pneumatique ou hydraulique 32 et l'extrémité ouverte 28 de la cavité 20 permet ainsi de raccorder deux caisses successives d'un point de vue pneumatique ou hydraulique lorsque celles-ci comprennent une paroi délimitant au moins une cavité délimitant un passage pour un fluide sous pression, par exemple un gaz sous pression.

Le dispositif de jonction pneumatique ou hydraulique 30 est peu encombrant, permet le maintien de l'étanchéité et il n'est pas nécessaire de prévoir plusieurs pièces de raccordement pneumatique ou hydraulique de formes différentes puisque la pièce de raccordement s'adapte aux deux extrémités d'une voiture.

Il est également possible de raccorder la pièce de raccordement à des canalisations supplémentaires, afin de distribuer le fluide par exemple vers un système de suspension, et/ou vers un système de freinage.

## Revendications

1. Structure de carrosserie (16) pour caisse (14) pour véhicule de transport public comprenant au moins deux voitures, notamment véhicule ferroviaire ou véhicule de transport routier, par exemple de transport routier guidé, comprenant une paroi (18) s'étendant selon une direction longitudinale (L), la paroi (18) délimitant au moins une cavité (20) s'étendant selon la direction longitudinale (L), la cavité (20) délimitant un passage pour un fluide sous pression, par exemple un gaz sous pression, la paroi (18) étant formée d'une seule pièce, la paroi (18) comprenant une face interne (22), une face externe (24) et des nervures (26) reliant la face interne (22) et la face externe (24), chaque cavité (20) étant définie entre la face interne (22), la face externe (24) et deux nervures (26) adjacentes, chaque cavité (20) présentant une extrémité ouverte (28), **caractérisée en ce que** la structure de carrosserie (16) comprend un dispositif de jonction pneumatique ou hydraulique (30) propre à mettre en communication fluidique et de façon étanche deux cavités (20) de deux voitures adjacentes, le dispositif de jonction pneumatique ou hydraulique (30) étant formé par l'extrémité ouverte (28) de la cavité de la paroi (18), chacune des deux cavités (20) présentant une forme adaptée pour recevoir une pièce de raccordement pneumatique ou hydraulique (32), et par ladite pièce de raccordement pneumatique ou hydraulique (32), la pièce de raccordement pneumatique ou hydraulique (32) comprenant un tube creux (36) s'étendant entre une première extrémité (40) adaptée pour être raccordée à l'extrémité ouverte (28) de ladite au moins une cavité (20) de la paroi (18) et une deuxième extrémité (42) adaptée pour être raccordée à un tube de raccordement.

2. Structure de carrosserie (16) selon la revendication 1, dans laquelle le tube creux (36) est coudé.

3. Structure de carrosserie (16) selon la revendication 1 ou 2, dans laquelle la pièce de raccordement pneumatique ou hydraulique (32) comporte une première section de fixation (46) à la caisse (14) de la voiture respective disposée au voisinage de la première extrémité (40) de la pièce de raccordement pneumatique ou hydraulique (32).

4. Structure de carrosserie (16) selon la revendication 3, dans laquelle la première section de fixation (46) se présente sous la forme d'une pièce rectangulaire s'étendant transversalement au tube creux (36), et comprend au moins un premier orifice (50) de réception de moyens de fixation (52) afin de fixer la pièce de raccordement pneumatique ou hydraulique (32) à la caisse (14) de la voiture respective.

5. Structure de carrosserie (16) selon l'une quelconque des revendications 1 à 4, dans laquelle la pièce de raccordement pneumatique ou hydraulique (32) comporte une deuxième section de fixation (48) à la caisse (14) de la voiture respective s'étendant en saillie depuis le tube creux (36), et disposée au voisinage de la deuxième extrémité (42) de la pièce de raccordement pneumatique ou hydraulique (32), la deuxième section de fixation (48) comprenant au moins un deuxième orifice (54) de réception de moyens de fixation (56) afin de fixer la pièce de raccordement pneumatique ou hydraulique (32) à la caisse (14) respective.

6. Structure de carrosserie (16) selon la revendication 5, dans laquelle la deuxième section de fixation (48) comprend un unique deuxième orifice (54) de réception, le deuxième orifice (54) étant de préférence de forme oblongue allongée.

7. Structure de carrosserie (16) selon l'une quelconque des revendications 1 à 6, comprenant à l'extrémité ouverte (28) de la cavité (20) un manchon (44) creux complémentaire de la première extrémité (40), le manchon (44) comprenant une extrémité de fixation (60) destinée à être fixée à la pièce de raccordement pneumatique ou hydraulique (32), le manchon (44) présentant un lamage à son extrémité de fixation (60) afin de raccorder de façon étanche la pièce de raccordement pneumatique ou hydraulique (32) au manchon (44).

8. Structure de carrosserie (16) selon la revendication 7, dans laquelle la première extrémité (40) est filetée, ou présente des aspérités complémentaires de renfoncements formés dans le manchon (44).

9. Structure de carrosserie (16) selon l'une quelconque des revendications 1 à 8, dans laquelle la pièce de raccordement pneumatique ou hydraulique (32) comprend en outre un second tube creux (58) en communication fluidique avec le tube creux (36) disposé à proximité de la deuxième extrémité (42) et transversalement au tube creux (36).

10. Véhicule de transport public comprenant au moins deux voitures, au moins deux voitures adjacentes comprenant une structure de carrosserie (16) selon l'une quelconque des revendications précédentes.

## Patentansprüche

1. Karosseriestruktur (16) für einen Wagenkasten (14) eines öffentlichen Verkehrsmittels mit mindestens zwei Wagen, insbesondere ein Schienenfahrzeug oder ein Straßentransportfahrzeug, z. B. für den geführten Straßenverkehr, mit einer Wand (18), die sich in einer Längsrichtung (L) erstreckt, wobei die Wand (18) mindestens einen Hohlraum (20) begrenzt, der sich in der Längsrichtung (L) erstreckt, wobei der Hohlraum (20) einen Durchgang für ein unter Druck stehendes Fluid, beispielsweise ein unter Druck stehendes Gas, begrenzt, wobei die Wand (18) aus einem Stück ausgebildet ist, die Wand (18) eine Innenseite (22), eine Außenseite (24) und Rippen (26) umfasst, die die Innenseite (22) und die Außenseite (24) verbinden, wobei jeder Hohlraum (20) zwischen der Innenfläche (22), der Außenfläche (24) und zwei benachbarten Rippen (26) definiert ist, wobei jeder Hohlraum (20) ein offenes Ende (28) aufweist, **dadurch gekennzeichnet, dass** die Karosseriestruktur (16) eine pneumatische oder hydraulische Verbindungsvorrichtung (30) umfasst, die geeignet ist, zwei Hohlräume (20) zweier benachbarter Wagen in dichte Fluidverbindung miteinander zu bringen. Die pneumatische oder hydraulische Verbindungsvorrichtung (30) wird durch das offene Ende (28) des Hohlraums in der Wand (18) gebildet, wobei jeder der beiden Hohlräume (20) eine Form aufweist, die zur Aufnahme eines pneumatischen oder hydraulischen Verbindungsstücks (32) geeignet ist, wobei das pneumatische oder hydraulische Verbindungsstück (32) ein hohles Rohr (36) umfasst, das sich zwischen einem ersten Ende (40), das dazu geeignet ist, mit dem offenen Ende (28) des mindestens einen Hohlraums (20) der Wand (18) verbunden zu werden und einem zweiten Ende (42), das zum Verbinden mit einem Verbindungsrohr geeignet ist erstreckt.

2. Karosseriestruktur (16) nach Anspruch 1, bei der das Hohlrohr (36) gebogen ist.

3. Karosseriestruktur (16) nach Anspruch 1 oder 2, wobei das pneumatische oder hydraulische Verbindungsstück (32) einen ersten Abschnitt (46) zur Befestigung am Wagenkasten (14) des jeweiligen Wagens aufweist, der in der Nähe des ersten Endes (40) des pneumatischen oder hydraulischen Verbindungsstücks (32) angeordnet ist.

4. Karosseriestruktur (16) nach Anspruch 3, wobei der erste Befestigungsabschnitt (46) in Form eines rechteckigen Stücks vorliegt, das sich quer zum Hohlrohr (36) erstreckt, und mindestens eine erste Öffnung (50) zur Aufnahme von Befestigungsmitteln (52) aufweist, um das pneumatische oder hydraulische Verbindungsstück (32) am Wagenkasten (14) des jeweiligen Wagens zu befestigen.

5. Karosseriestruktur (16) nach einem der Ansprüche 1 bis 4, wobei das pneumatische oder hydraulische Verbindungsstück (32) einen zweiten Abschnitt (48) zur Befestigung am Wagenkasten (14) des jeweiligen Wagens aufweist, der sich von dem Hohlrohr (36) aus vorstehend erstreckt und in der Nähe des zweiten Endes (42) des pneumatischen oder hydraulischen Verbindungsstücks (32) angeordnet ist, wobei der zweite Befestigungsabschnitt (48) mindestens eine zweite Öffnung (54) zur Aufnahme von Befestigungsmitteln (56) zum Befestigen des pneumatischen oder hydraulischen Verbindungsstücks (32) am jeweiligen Wagenkasten (14) aufweist.

6. Karosseriestruktur (16) nach Anspruch 5, wobei der zweite Befestigungsabschnitt (48) eine einzelne zweite Aufnahmeöffnung (54) aufweist, wobei die zweite Öffnung (54) vorzugsweise eine längliche ausgestreckte Form hat.

7. Karosseriestruktur (16) nach einem der Ansprüche 1 bis 6, die am offenen Ende (28) des Hohlraums (20) eine hohle Hülse (44) aufweist, die komplementär zum ersten Ende (40) ist, wobei die Hülse (44) ein Befestigungsende (60) aufweist, um an dem pneumatischen oder hydraulischen Verbindungsstück (32) befestigt zu werden, wobei die Hülse (44) an ihrem Befestigungsende (60) eine Senkung aufweist, um das pneumatische oder hydraulische Verbindungsstück (32) abdichtend mit der Hülse (44) zu verbinden.

8. Karosseriestruktur (16) nach Anspruch 7, wobei das erste Ende (40) mit einem Gewinde versehen ist oder komplementäre Unebenheiten zu in der Hülse (44) ausgebildeten Vertiefungen aufweist.

9. Karosseriestruktur (16) nach einem der Ansprüche 1 bis 8, wobei das pneumatische oder hydraulische Verbindungsstück (32) außerdem ein zweites Hohlrohr (58) in Fluidverbindung mit dem Hohlrohr (36) umfasst, das in der Nähe des zweiten Endes (42) und quer zum Hohlrohr (36) angeordnet ist.

10. Öffentliches Transportfahrzeug mit mindestens zwei Wagen, wobei mindestens zwei benachbarte Wagen eine Karosseriestruktur (16) nach einem der vorhergehenden Ansprüche aufweisen.

## Claims

1. Body structure (16) for a body (14) for a public transport vehicle comprising at least two cars, in particular a rail vehicle or a road transport vehicle, for example a guided road transport vehicle, comprising a wall (18) extending in a longitudinal direction (L), the wall (18) delimiting at least one cavity (20) extending in the longitudinal direction (L), the cavity (20) delimiting a passage for a pressurised fluid, for example a pressurised gas, the wall (18) being formed in a single piece, the wall (18) comprising an inner face (22), an outer face (24) and ribs (26) connecting the inner face (22) and the outer face (24), each cavity (20) being defined between the inner face (22), the outer face (24) and two adjacent ribs (26), each cavity (20) having an open end (28), **characterised in that** the body structure (16) comprises a pneumatic or hydraulic junction device (30) suitable for placing in fluid and sealed communication two cavities (20) of two adjacent cars, the pneumatic or hydraulic junction device (30) being formed by the open end (28) of the cavity in the wall (18), each of the two cavities (20) having a shape adapted to receive a pneumatic or hydraulic connection piece (32), and by the said pneumatic or hydraulic connection piece (32), the pneumatic or hydraulic connection piece (32) comprising a hollow tube (36) extending between a first end (40) adapted to be connected to the open end (28) of said at least one cavity (20) of the wall (18) and a second end (42) adapted to be connected to a connecting tube.

2. A body structure (16) as claimed in claim 1, wherein the hollow tube (36) is bent.

3. Body structure (16) according to claim 1 or 2, wherein the pneumatic or hydraulic connection piece (32) comprises a first section (46) for attachment to the body (14) of the respective car placed in the vicinity of the first end (40) of the pneumatic or hydraulic connection piece (32).

4. Body structure (16) according to claim 3, wherein the first fastening section (46) is in the form of a rectangular piece extending transversely to the hollow tube (36), and comprises at least one first aperture (50) for receiving attachment means (52) for connecting the pneumatic or hydraulic connection piece (32) to the body (14) of the respective car.

5. Body structure (16) according to any one of claims 1 to 4, in which the pneumatic or hydraulic connection piece (32) comprises a second section (48) for attachment to the body (14) of the respective car extending in a projecting manner from the hollow tube (36), and arranged in the vicinity of the second end (42) of the pneumatic or hydraulic connection piece (32), the second attachment section (48) comprising at least one second aperture (54) for receiving attachment means (56) in order to attach the pneumatic or hydraulic connection part (32), to the respective body (14).

6. A body structure (16) according to claim 5, wherein the second attachment section (48) comprises a single second receiving aperture (54), the second aperture (54) preferably being of an elongate oblong form.

7. Body structure (16) according to any one of claims 1 to 6, comprising, at the open end (28) of the cavity (20), a hollow sleeve (44) complementary to the first end (40), the sleeve (44) comprising an attachment end (60) intended to be fixed to the pneumatic or hydraulic connection part (32), the sleeve (44) having a counterbore at its attachment end (60) in order to connect the pneumatic or hydraulic connection part (32) to the sleeve (44) in a sealed manner.

8. Body structure (16) according to claim 7, in which the first end (40) is threaded, or has asperities in addition to indentations formed in the sleeve (44).

9. A body structure (16) according to any one of claims 1 to 8, wherein the pneumatic or hydraulic connection piece (32) further comprises a second hollow tube (58) in fluid communication with the hollow tube (36) placed in the vicinity of the second end (42) and transversely to the hollow tube (36).

10. A public transport vehicle comprising at least two cars, at least two adjacent cars comprising a body structure (16) according to any one of the preceding claims.
